# EUROPEAN PATENT APPLICATION

(11) **EP 3 992 232 A1**
(43) Date of publication of application: **04.05.2022**
(21) Application number: 20204864.1
(22) Date of filing: 30.10.2020
(51) Int. Cl.: C08J 9/00, C08J 9/12, C08L 33/06, C09J 133/04

(54) **FOAMABLE PRECURSOR OF A MICROCELLULAR FOAMED POLYMERIC COMPOSITION**

(71) Applicant: 3M Innovative Properties Company, Saint Paul, MN 55133-3427 (US)
(72) Inventor: APELDORN, Thomas, 41453 Neuss (DE); KEMPF, Michael, 41453 Neuss (DE); BIEBER, Reinhard, 41453 Neuss (DE); KONIETZNY, Roman, 41453 Neuss (DE); KUHLMANN, Rene, 41453 Neuss (DE); ECKHARDT, Doreen, 41453 Neuss (DE); GIESE, Maja, 41453 Neuss (DE); KALISH, Jeff, Saint Paul, Minnesota 55133-3427 (US); HANNEN, Thomas, 41453 Neuss (DE)
(74) Representative: Mathys & Squire

(57) **Abstract**

A foamable precursor of a microcellular foamed polymeric composition, wherein the foamable precursor comprises:
a) a (meth)acrylate-based (co)polymeric base component having a glass transition temperature (Tg) no greater than 20°C, when measured by Differential Scanning Calorimetry (DSC) according to test method ASTM D3418-15;
b) a thermoplastic polymeric material having a Vicat softening temperature greater than 20°C, when measured according to test method ASTM D1525-09; and
c) optionally, a physical foaming agent.

## Description

### Technical Field

The present disclosure relates generally to the field of foamed polymeric compositions, more specifically to the field of microcellular foamed adhesive compositions. The present disclosure also relates to a process of manufacturing such microcellular foamed polymeric compositions and to uses of such foamed polymeric compositions.

### Background

Foamed polymeric compositions have been known for quite some time and have been used for various applications including mechanical buffering, such as shock absorption and vibration damping, as well as compliance to irregular substrates. Partly due to these beneficial properties, foamed polymeric compositions have been increasingly used for the manufacturing of adhesive compositions and adhesive tapes, in particular pressure-sensitive adhesive tapes.

Adhesives have been used for a variety of marking, holding, protecting, sealing and masking purposes. Adhesive tapes generally comprise a backing, or substrate, and an adhesive. One type of adhesive which is particularly preferred for many applications is represented by pressure sensitive adhesives. As applications for pressure-sensitive adhesives have increased substantially in recent years, performance requirements have become increasingly demanding.

Materials that have been found to function well as pressure sensitive adhesives are polymers designed and formulated to exhibit the requisite viscoelastic properties resulting in a desired balance of tack, peel adhesion, and shear strength. The most commonly used polymers for the preparation of pressure sensitive adhesives are various (meth)acrylate-based copolymers, natural rubber, synthetic rubbers, and silicones.

Pressure sensitive adhesive polymeric foams are used as attachment devices for a wide variety of assembly and manufacturing applications, such as interior or exterior automotive mounting of panels and moldings. In a variety of such applications, adhesion to rough or irregular surfaces is desired or necessitated. Under these circumstances, thicker conformable pressure sensitive adhesive foams generally outperform thin pressure sensitive adhesives (such as those less than 125 microns thick).

In addition to increasing performance requirements for pressure sensitive adhesives, volatile organic compounds (VOC) reduction regulations are becoming increasingly important in particular for various kinds of interior applications (occupational hygiene and occupational safety) such as e.g. in the construction market or in the automotive or electronics industries.

The reduction of organic solvent usage in the manufacturing process of pressure sensitive adhesives has quickly emerged as one straightforward means to reduce the overall VOC levels. The use of specific scavengers for organic contaminants, as described in WO 01/44400 (Yang), is another alternative way to achieve reduced VOC levels. However, these solutions for reducing overall VOC levels are often associated with increased manufacturing complexity and production costs. Also, the overall VOC levels observed often do not fulfill the requirements for various kinds of interior applications such as e.g. in the construction market or in the automotive or electronics industries. Another alternative solution known in the art involves using specific rubber-based polymeric material, as described e.g. in US-A1-2016145406 (Bieber et al.). The disclosed solution typically suffers from lack of versatility and formulation flexibility.

(Meth)acrylate-based (co)polymers still remain polymers of choice for the manufacturing of pressure sensitive adhesive polymeric foams due to their advantageous intrinsic properties. In that context, the most common method for foaming acrylate-based polymeric compositions, in particular acrylate-based pressure sensitive adhesive polymeric compositions, involves using expandable microspheres, as described e.g. in US-A1-2011/0281964 (Zmarsly et al.). These expandable microspheres typically comprise low molecular weight organic materials or residuals qualifying as VOC, which therefore contributes to increase the overall VOC content of the polymeric foam. Moreover, the use of expandable microspheres is known to introduce substantial limitations in terms of reducing density and foam cell size in the corresponding polymeric foam, and to be associated with increased manufacturing and processing complexity.

### Summary

Without contesting the technical advantages associated with the foamed polymeric compositions known in the art, there is still a need for a foamable precursor of a stable microcellular foamed polymeric composition provided with advantageous microstructure characteristics and mechanical performance attributes, as well as with excellent overall VOC reduction characteristics.

According to one aspect, the present disclosure relates to a foamable precursor of a microcellular foamed polymeric composition, wherein the foamable precursor comprises:
a) a (meth)acrylate-based (co)polymeric base component having a glass transition temperature (Tg) no greater than 20°C, when measured by Differential Scanning Calorimetry (DSC) according to test method ASTM D3418-15;
b) a thermoplastic polymeric material having a Vicat softening temperature greater than 20°C, when measured according to test method ASTM D1525-09; and
c) optionally, a physical foaming agent.

In another aspect, the present disclosure is directed to a process of manufacturing a microcellular foamed polymeric composition, comprising the steps of:
a) providing a foamable precursor of a microcellular foamed polymeric composition as described above;
b) optionally, providing a physical foaming agent as described above;
c) allowing the physical foaming agent to foam the foamable precursor of a microcellular foamed polymeric composition, thereby obtaining a microcellular foamed polymeric composition; and
d) optionally, crosslinking the microcellular foamed polymeric composition.

According to still another aspect, the present disclosure relates to a microcellular foamed polymeric composition obtained from the process as described above.

In yet another aspect, the present disclosure is directed to the use of a foamable precursor of a microcellular foamed polymeric composition or a microcellular foamed polymeric composition as described above for industrial applications, in particular for construction market applications, transportation market applications and electronic applications.

### Brief Description of the Drawings

**FIG. 1** illustrates a schematic side view of an exemplary mixing apparatus for use in the present disclosure.
**FIG. 2** is a scanning electron microscope image of a cross section of an exemplary foamed polymeric composition according to one aspect of the present disclosure.

### Detailed description

According to a first aspect, the present disclosure relates to a foamable precursor of a microcellular foamed polymeric composition, wherein the foamable precursor comprises:
a) a (meth)acrylate-based (co)polymeric base component having a glass transition temperature (Tg) no greater than 20°C, when measured by Differential Scanning Calorimetry (DSC) according to test method ASTM D3418-15;
b) a thermoplastic polymeric material having a Vicat softening temperature greater than 20°C, when measured according to test method ASTM D1525-09; and
c) optionally, a physical foaming agent.

In the context of the present disclosure, it has been surprisingly found that a foamable precursor as described above is outstandingly suitable for forming a microcellular foamed polymeric composition provided with advantageous and stable microstructure characteristics, in particular when subjected to a physical foaming process. The microcellular foamed polymeric composition of the present disclosure is in particular characterized by a (long-term) stability of the foam cell structure and morphology. The microcellular foamed polymeric composition resulting from the physical foaming of the foamable precursor as described above is further characterized by relatively small cell sizes, which makes it particularly suitable for forming relatively thin foamed polymeric layers. In a typical aspect of the microcellular foamed polymeric composition, the average cell size no greater than 100 micrometers, no greater than 50 micrometers, or even no greater than 10 micrometers. The microcellular foamed polymeric composition of the disclosure is further characterized by relatively high cell density and relatively low foam density characteristics.

Besides the advantageous microstructure characteristics, the microcellular foamed polymeric composition of the present disclosure is further characterized with excellent mechanical performance attributes, in particular advantageous elongation and compressibility characteristics, as well as excellent stress relaxation properties. Microcellular polymer foams typically provide further unique properties, such as e.g. higher impact strength, toughness and thermal stability, as well as lower dielectric constant and thermal conductivity, when compared to conventional foams.

The microcellular foamed polymeric compositions according to the present disclosure are further characterized by providing low VOC levels, typically less than 400 ppm, less than 200 ppm, or even less 100 ppm when measured by thermal desorption analysis according to test method VDA278. In some advantageous aspects of the disclosure, the microcellular foamed polymeric compositions as described herein are characterized by very low or even substantial absence of perceptible odor. In another advantageous aspect, the microcellular foamed polymeric compositions of the disclosure as described herein are provided with excellent adhesion characteristics, in particular pressure sensitive adhesion properties and/or self-stick behavior.

As such, the microcellular foamed polymeric compositions resulting from the physical foaming of the foamable precursor as described above are particularly suited for (industrial) interior applications, more in particular for construction market applications, automotive applications or electronic applications. In the context of automotive applications, the microcellular foamed polymeric compositions as described herein may find particular use for adhering e.g. automotive body side mouldings, weather strips or rearview mirrors. Regarding electronic applications, the microcellular foamed polymeric compositions as described herein are particularly suitable for the fixation of display panels in mobile hand-held electronic devices.

Without wishing to be bound by theory, it is believed that the excellent characteristics and performance attributes associated with the microcellular foamed polymeric compositions described herein directly result from the use of the foamable precursor as described above, in particular to the use of a (co)polymeric blend comprising:
a) a (meth)acrylate-based (co)polymeric base component having a glass transition temperature (Tg) no greater than 20°C, when measured by Differential Scanning Calorimetry (DSC) according to test method ASTM D3418-15; and
b) a thermoplastic polymeric material having a Vicat softening temperature greater than 20°C, when measured according to test method ASTM D1525-09.

The advantageous characteristics and performance attributes as described above are particularly unexpected findings as (meth)acrylate-based (co)polymeric material, and in particular those having a relatively low glass transition temperature (Tg) of no greater than 20°C, are generally recognized as unsuitable for forming foamed polymeric compositions having long-term foam structure stability when foamed with a physical foaming agent. This is generally caused by cell instability and cell collapse happening during physical foaming in a (meth)acrylate-based (co)polymeric material which is relatively soft by nature. This excessive softness characteristic of the (meth)acrylate-based (co)polymeric material would have been intuitively expected to detrimentally affect the workability, processability and foaming characteristics of the foamable precursor.

In the context of the present disclosure, it has been surprisingly found that the addition of a thermoplastic polymeric material having a Vicat softening temperature greater than 20°C beneficially impacts not only the foamability characteristics of the initial polymeric material, but also the long term stability of the resulting microcellular foamed polymeric composition.

Without wishing to be bound by theory still, it is believed that the addition of a thermoplastic polymeric material having a Vicat softening temperature greater than 20°C advantageously increases the overall viscosity and the melt strength of the foamable precursor, which in turns allows better control of the cell growth and prevents unwanted cell collapse or coalescence during the foaming process with a physical foaming agent. The relatively high affinity between the thermoplastic polymeric material as described above and the physical foaming agent is also believed to advantageously affect the overall foaming process. These advantageous technical effects are believed to directly or indirectly contribute to not only the beneficial microstructure characteristics of the microcellular foamed polymeric composition of the present disclosure, but also to their long-term stability.

In the context of the present disclosure, the Applicant was faced with the technical challenge of formulating a polymeric precursor suitable for foaming with a physical foaming agent and resulting into a microcellular foamed polymeric composition providing a delicate and somewhat contradicting combination of flexibility (through advantageous mechanical properties) and long-term foam structure stability.

The use of a (meth)acrylate-based (co)polymeric base component having a glass transition temperature (Tg) no greater than 20°C, and which may be referred to as a soft polymer, is particularly counterintuitive in that context.

In the context of the present disclosure still, it has been found that the use of a physical foaming agent is particularly beneficial as it provides excellent overall VOC levels reduction performance, and in particular improved VOC levels reduction when compared to using expandable microspheres, which is one of the most commonly known technical solution for foaming polymeric compositions. The use of a physical foaming agent further obviates the need to take specific technical measures and processing precautions to preserve the otherwise sensitive expandable microspheres during the foaming and post-treatment process. Using a physical foaming agent, as opposed to expandable microspheres, is also more advantageous as it allows using further functional fillers which would typically damage the expandable microspheres in conventionally foamed polymeric compositions.

It has been further found that the use of a physical foaming agent specifically provided in supercritical conditions allows higher loading and faster diffusion rate of the physical foaming agent into the (hot melt processable) polymeric precursor composition, when compared to the use of a physical foaming agent in non-supercritical state. Physical foaming agents in supercritical state also provide more homogeneous and stable distribution of the physical foaming agent into the polymeric precursor melt, thereby producing an improved solution of the physical foaming agent.

In the context of the present disclosure, the term "microcellular foamed polymeric composition" is meant to designate a polymeric foam material which comprises voids, typically in an amount from 10% to 90% by volume, wherein the voids (such as cells) are formed by a physical foaming agent as described hereinafter and have an average size no greater than 200 micrometers when determined by scanning electron microscopy according to ASTM D3576.

In the context of the present disclosure, the expression "physical foaming agent in supercritical conditions" is meant to refer to those supercritical pressure (Pc) and supercritical temperature (Tc) conditions under which the physical foaming agent, which is typically a gas at ambient temperature (23°C) and pressure (1013 hPa), is compressed to a state where it has the density and solvation characteristics of a liquid, but the viscosity, permeability and diffusivity of a gas. A supercritical physical foaming agent is a single-phase material which exists above a critical point, which point is determined by the supercritical pressure (Pc) and supercritical temperature (Tc), and which values depend on the particular physical foaming agent. As an example, the Tc and Pc values for carbon dioxide are respectively 31°C and 7.4 MPa.

The term "nucleation" is meant to designate a process by which a homogeneous solution of polymeric material and dissolved molecules of a species, that is typically a gas under ambient conditions, undergoes formations of clusters of molecules of the species that define "nucleation sites" from which cells will grow. In other words, the nucleation designates a change from a homogeneous solution to a multi-phase mixture in which, throughout the polymeric material, sites of aggregation of at least several molecules of physical foaming agent are formed.

The expression "polydispersity" is meant to refer to the weight average cell diameter divided by the number average cell diameter.

As used herein, the expression "hot melt processable polymeric composition" is meant to designate a polymer or a blended polymeric material with a melt viscosity profile such that it can be coated on a substrate or carrier in a thin layer at a process temperature significantly above normal room temperature.

The foamable precursor of a microcellular foamed polymeric composition comprises as a first component a (meth)acrylate-based (co)polymeric base component having a glass transition temperature (Tg) no greater than 20°C, when measured by Differential Scanning Calorimetry (DSC) according to test method ASTM D3418-15.

(Meth)acrylate-based (co)polymeric base components for use herein are not particularly limited, as long as they meet the above-mentioned Tg requirement. Suitable (meth)acrylate-based (co)polymeric base components for use herein may be easily identified by those skilled in the art, in the light of the present disclosure.

In one typical aspect of the disclosure, the (meth)acrylate-based (co)polymeric base component for use herein is an amorphous (co)polymeric component.

In another typical aspect of the disclosure, the (meth)acrylate-based (co)polymeric base component for use herein is a random (co)polymeric component.

In one advantageous aspect, the (meth)acrylate-based (co)polymeric base component has a glass transition temperature (Tg) no greater than 15°C, no greater than 10°C, no greater than 5°C, no greater than 0°C, no greater than -5°C, no greater than -10°C, no greater than -15°C, no greater than -20°C, no greater than -25°C, or even no greater than -30°C, when measured by DSC according to test method ASTM D3418-15.

In another advantageous aspect, the (meth)acrylate-based (co)polymeric base component has a glass transition temperature (Tg) greater than -40°C, greater than -35°C, greater than -30°C, greater than -25°C, or even greater than -20°C, when measured by DSC according to test method ASTM D3418-15.

In still another advantageous aspect, the (meth)acrylate-based (co)polymeric base component for use herein has a glass transition temperature (Tg) in a range from -35°C to 20°C, from -35°C to 15°C, from -30°C to 10°C, from -25°C to 10°C, from -25°C to 5°C, from -25°C to 0°C, or even from -20°C to 0°C, when measured by DSC according to test method ASTM D3418-15.

According to still another advantageous aspect, the (meth)acrylate-based (co)polymeric base component for use in the present disclosure has a weight-average molecular weight (M_{w}) greater than 250.000 g/mol, greater than 300.000 g/mol, greater than 400.000 g/mol, greater than 500.000 g/mol, greater than 600.000 g/mol, greater than 700.000 g/mol, or even greater than 800.000 g/mol. Unless otherwise indicated, the weight-average molecular weight (M_{w}) of the (meth)acrylate-based (co)polymeric base component for use herein is determined by conventional gel permeation chromatography (GPC) using appropriate techniques well known to those skilled in the art.

According to yet another advantageous aspect of the disclosure, the(meth)acrylate-based (co)polymeric base component is a hot melt processable polymeric composition.

According to a more advantageous aspect of the disclosure, the (meth)acrylate-based (co)polymeric base component is selected from the group consisting of thermoplastic polymeric compositions, elastomeric polymeric compositions, and any combinations thereof.

According to a typical aspect of the disclosure, the (meth)acrylate-based (co)polymeric base component for use herein is different from the thermoplastic polymeric material having a Vicat softening temperature greater than 20°C, when measured according to test method ASTM D 1525-09.

In one preferred aspect, the (meth)acrylate-based (co)polymeric base component is selected from the group consisting of pressure sensitive adhesive compositions.

In another preferred aspect, the (meth)acrylate-based (co)polymeric base component for use herein comprises the (co)polymerization reaction product of a (co)polymerizable material comprising:
i. C₁-C₃₂ acrylic acid ester monomer units;
ii. ethylenically unsaturated monomer units which are copolymerizable with monomer units (i); and
iii. optionally, further ethylenically unsaturated monomer units which are copolymerizable with monomer units (i) and/or (ii).

In one typical aspect of the disclosure, the C₁-C₃₂ (meth)acrylic acid ester monomer units (i) for use herein are selected from the group of C₁-C₂₅ (meth)acrylic acid ester monomer units, C₁-C₂₀ (meth)acrylic acid ester monomer units, C₁-C₁₈ (meth)acrylic acid ester monomer units, C₂-C₁₆ (meth)acrylic acid ester monomer units, C₂-C₁₄ (meth)acrylic acid ester monomer units, or even C₂-C₁₄ (meth)acrylic acid ester monomer units.

In another typical aspect of the disclosure, the C₁-C₃₂ (meth)acrylic acid ester monomer units (i) are selected from the group of C₄-C₃₀ (meth)acrylic acid ester monomer units, C₄-C₁₄ (meth)acrylic acid ester monomer units, or even from the group of C₄-C₉ (meth)acrylic acid ester monomer units.

In one advantageous aspect, the C₁-C₃₂ (meth)acrylic acid ester monomer units (i) for use herein are selected from the group consisting of C₄-C₉ (meth)acrylic acid ester monomer units, preferably from the group consisting of n-butyl acrylate, n-butyl methacrylate, n-pentyl acrylate, n-pentyl methacrylate, n-amyl acrylate, n-hexyl acrylate, hexyl methacrylate, n-heptyl (meth)acrylate, n-octyl acrylate, n-octyl methacrylate, n-nonyl (meth)acrylate, isobutyl (meth)acrylate, isooctyl acrylate, isooctyl methacrylate, 2-ethylhexyl acrylate, 2-ethylhexyl methacrylate, 2-octyl acrylate, and any combinations or mixtures thereof.

In another advantageous aspect, the C₁-C₃₂ (meth)acrylic acid ester monomer units (i) are selected from the group consisting of isooctyl acrylate, 2-ethylhexyl acrylate, and any combinations or mixtures thereof.

In still another advantageous aspect of the disclosure, the ethylenically unsaturated monomer units (ii) which are copolymerizable with monomer units (i) are selected from the group consisting of acrylic acid, methacrylic acid, itaconic acid, maleic acid, fumaric acid, crotonic acid, aconitic acid, dimethylacrylic acid, beta-acryloyloxypropionic acid, trichloroacrylic acid, vinylacetic acid, vinylphosphonic acid, itaconic acid, maleic anhydride, hydroxyethyl acrylate, hydroxypropyl acrylate, hydroxyethyl methacrylate, hydroxypropyl methacrylate, 6-hydroxyhexyl methacrylate, allyl alcohol, glycidyl acrylate, glycidyl methacrylate, and any combinations or mixtures thereof.

In yet another advantageous aspect of the disclosure, the ethylenically unsaturated monomer units (ii) which are copolymerizable with monomer units (i) are selected from the group consisting of (meth)acrylic acid monomers, in particular acrylic acid monomers, and any combinations or mixtures thereof.

In a typical aspect, the optional further ethylenically unsaturated monomer units (iii) are selected from the group consisting of C₁-C₁₈ (meth)acrylic acid ester monomer units.

The (meth)acrylate-based (co)polymeric base component for use herein may be prepared by processes familiar to the skilled person, with particular advantage by conventional free-radical polymerizations or controlled radical polymerizations. A variety of conventional free radical polymerization methods, including solution, bulk (i.e., with little or no solvent), dispersion, emulsion, and suspension processes, which processes are familiar to the skilled person. The particular polymerization method used may be influenced by the use of the resulting microcellular foamed polymeric composition. The reaction product of the polymerizable materials can be random or block copolymers. The polyacrylates may be prepared by copolymerization of the monomeric components using the usual polymerization initiators and also, where appropriate, regulators (chain transfer agents), with polymerization taking place at the customary temperatures in bulk, in emulsion, such as in water or liquid hydrocarbons, for example, or in solution.

According to one particular aspect, the (meth)acrylate-based (co)polymeric base component for use herein comprises the essentially adiabatic (co)polymerization reaction product of the (co)polymerizable material. Essentially adiabatic polymerization methods using a batch reactor are described e.g. in U.S. Pat. No. 5,637,646 (Ellis).

According to one advantageous aspect of the disclosure, the (meth)acrylate-based (co)polymeric base component comprises the (co)polymerization reaction product of a (co)polymerizable material comprising:
a) a (meth)acrylate-based (co)polymer comprising at least one reactive functional group (X); and
b) a multi-functional oligomeric branching compound comprising an oligomer backbone and having a weight-average molecular weight (M_{w}) greater than 250 g/mol, wherein the multi-functional oligomeric branching compound comprises at least two complementary reactive functional groups (Y) which are capable of chemically reacting with the at least one reactive functional group (X) of the (meth)acrylate-based (co)polymer.

In the context of the present disclosure, it has surprisingly been found that the use of such specific (meth)acrylate-based (co)polymeric base component in the foamable precursor of the disclosure advantageously impacts the long-term stability of the resulting microcellular foamed polymeric composition.

It has further been found that the use of such specific (meth)acrylate-based (co)polymeric base component in the foamable precursor of the disclosure advantageously impacts the mechanical performance attributes of the resulting microcellular foamed polymeric composition, in particular the elongation and compressibility characteristics, as well as the stress relaxation properties.

It has been further found that the use of such specific (meth)acrylate-based (co)polymeric base component in the foamable precursor of the disclosure allows producing pressure sensitive adhesives having reduced overall VOC levels whilst providing good and versatile adhesion characteristics. This specific (meth)acrylate-based (co)polymeric base component has also been found to provide other advantageous properties, in particular beneficial workability and processability properties such as e.g. advantageous pumpability, flowability, extrudability, applicability, and coatability characteristics, in particular under relatively mild processing conditions.

Without wishing to be bound by theory, it is believed that these excellent characteristics and performance attributes are due in particular to the presence of a specific combination of: (a) the (meth)acrylate-based (co)polymer comprising at least one reactive functional group (X); and (b) the multi-functional oligomeric branching compound comprising an oligomer backbone having a weight-average molecular weight (M_{w}) greater than 250 g/mol and at least two complementary reactive functional groups (Y) which are capable of chemically reacting with the at least one reactive functional group of the (meth)acrylate-based (co)polymer.

In the context of the present disclosure, it has been surprisingly found that when the two above-mentioned reactive components are contacted under the suitable reaction conditions, a branched (meth)acrylate-based (co)polymer is formed which has an increased molecular weight (M_{w}) when compared to the initial (meth)acrylate-based (co)polymer, but which surprisingly keeps the excellent workability and processability properties of the foamable precursor composition as described above, in particular under the hotmelt processing conditions.

Still without wishing to be bound by theory, it is believed that it is precisely the formation of this branched (meth)acrylate-based (co)polymer which leads to producing microcellular foamed polymeric compositions characterized by the excellent characteristics and performance attributes as described above.

In the context of the present disclosure, the term "multi-functional oligomeric branching compound" is meant to designate a compound comprising an oligomer backbone and which is capable of chemically reacting via covalent bond with at least one reactive functional group present in the backbone of the (meth)acrylate-based (co)polymer, thereby forming a side-chain or a branching in the backbone of the (meth)acrylate-based (co)polymer. In particular, the term "multi-functional oligomeric branching compound" is not meant to designate a compound capable of chemically reacting via covalent bond with at least one reactive functional group present at a terminal position of the (meth)acrylate-based (co)polymer. In the context of the present disclosure, the terms "branching compound", "grafting compound" and "chain-extender compound" may be used interchangeably.

In one advantageous aspect, the (meth)acrylate-based (co)polymer for use herein has a weight-average molecular weight (M_{w}) no greater than 500.000 g/mol, no greater than 480.000 g/mol, no greater than 450.000 g/mol, no greater than 420.000 g/mol, no greater than 400.000 g/mol, no greater than 380.000 g/mol, no greater than 350.000 g/mol, no greater than 320.000 g/mol, no greater than 300.000 g/mol, no greater than 290.000 g/mol, no greater than 280.000 g/mol, no greater than 270.000 g/mol, no greater than 260.000 g/mol, or even no greater than 250.000 g/mol. Unless otherwise indicated, the weight-average molecular weight (M_{w}) of the (meth)acrylate-based (co)polymer is determined by conventional gel permeation chromatography (GPC) using appropriate techniques well known to those skilled in the art.

In another advantageous aspect, the (meth)acrylate-based (co)polymer for use herein has a weight-average molecular weight (M_{w}) comprised in a range from 6.000 to 480.000 g/mol, from 6.000 to 450.000 g/mol, from 6.000 to 420.000 g/mol, from 6.000 to 400.000 g/mol, from 6.000 to 380.000 g/mol, from 6.000 to 360.000 g/mol, from 6.000 to 340.000 g/mol, from 10.000 to 320.000 g/mol, from 30.000 to 300.000 g/mol, from 50.000 to 300.000 g/mol, from 80.000 to 300.000 g/mol, from 100.000 to 300.000 g/mol, from 100.000 to 300.000 g/mol, from 150.000 to 300.000 g/mol, from 200.000 to 300.000 g/mol, from 220.000 to 300.000 g/mol, from 220.000 to 280.000 g/mol, or even from 220.000 to 260.000 g/mol.

In another advantageous aspect, the (meth)acrylate-based (co)polymer is curable, in particular free-radical curable, more in particular with the provision of radiation, more in particular UV radiation, e-beam radiation or gamma radiation, more in particular UV-C radiation.

In one particular aspect of the disclosure, the at least one functional group (X) for use herein is selected from the group consisting of carboxylic acids, hydroxyls, amines, aziridines, azetidines, pyrrolidines, piperidines, carbodiimides, isocyanates, epoxides, acid anhydrides, amides, and any combinations or mixtures thereof.

In one preferred aspect, the at least one functional group (X) for use in the present disclosure is selected from the group consisting of carboxylic acids, and any combinations or mixtures thereof.

In another particular aspect of the disclosure, the complementary functional groups (Y) for use herein are selected from the group consisting of carboxylic acids, hydroxyls, amines, aziridines, azetidines, pyrrolidines, piperidines, carbodiimides, isocyanates, epoxides, acid anhydrides, amides, and any combinations or mixtures thereof.

According to one preferred aspect of the disclosure, the complementary reactive functional groups (Y) are selected from the group consisting of aziridines, carbodiimides, and any combinations or mixtures thereof.

According to a more preferred aspect of the disclosure, the at least one functional group (X) for use herein is selected from the group consisting of carboxylic acids, and any combinations or mixtures thereof; and the complementary reactive functional groups (Y) for use herein are selected from the group consisting of aziridines, carbodiimides, and any combinations or mixtures thereof.

Multi-functional oligomeric branching compounds for use herein are not particularly limited, as long as they meet the following three requirements: a) they comprise an oligomer backbone, b) they have a weight-average molecular weight (M_{w}) greater than 250 g/mol, and c) they comprise at least two complementary reactive functional groups (Y) which are capable of chemically reacting with the at least one reactive functional group (X) of the (meth)acrylate-based (co)polymer. Suitable multi-functional oligomeric branching compounds for use herein may be easily identified by those skilled in the art, in the light of the present disclosure. Unless otherwise indicated, the weight-average molecular weight (M_{w}) of the multi-functional oligomeric branching compound for use herein is determined by conventional gel permeation chromatography (GPC) using appropriate techniques well known to those skilled in the art.

In one particular aspect of the disclosure, the multi-functional oligomeric branching compound for use herein has a weight-average molecular weight (M_{w}) greater than 300 g/mol, greater than 350 g/mol, greater than 400 g/mol, greater than 450 g/mol, greater than 500 g/mol, greater than 550 g/mol, greater than 600 g/mol, greater than 650 g/mol, greater than 700 g/mol, greater than 800 g/mol, greater than 1000 g/mol, greater than 2000 g/mol, greater than 3000 g/mol, greater than 4000 g/mol, greater than 5000 g/mol, or even greater than 6000 g/mol.

In another particular aspect of the disclosure, the multi-functional oligomeric branching compound for use herein has a weight-average molecular weight (M_{w}) no greater than 20.000 g/mol, no greater than 18.000 g/mol, no greater than 16.000 g/mol, no greater than 15.000 g/mol, no greater than 12.000 g/mol, no greater than 10.000 g/mol, no greater than 9500 g/mol, no greater than 9000 g/mol, no greater than 8500 g/mol, no greater than 8000 g/mol, no greater than 7500 g/mol, no greater than 7000 g/mol, no greater than 5500 g/mol, no greater than 6000 g/mol, no greater than 5000 g/mol, no greater than 4000 g/mol, no greater than 3000 g/mol, no greater than 2000 g/mol, or even no greater than 1000 g/mol.

In still another particular aspect of the disclosure, the multi-functional oligomeric branching compound for use herein has a weight-average molecular weight (M_{w}) comprised in a range from 280 to 50.000 g/mol, from 350 to 40.000 g/mol, from 400 to 30.000 g/mol, from 400 to 20.000 g/mol, from 450 to 15.000 g/mol, from 500 to 10.000 g/mol, from 500 to 8.000 g/mol, from 600 to 8.000 g/mol, or even from 600 to 6.000 g/mol.

In one advantageous aspect, the complementary reactive functional groups (Y) for use herein are located (at least) at each terminal position of the oligomer backbone.

According to an advantageous aspect, the multi-functional oligomeric branching compound for use herein comprises an oligomer backbone comprising in particular a polyether, a polyester or a polythioether.

According to a more advantageous aspect, the multi-functional oligomeric branching compound for use herein comprises an oligomer backbone comprising (or consisting of) a polyether.

In an even more advantageous aspect of the disclosure, the multi-functional oligomeric branching compound comprises at least one cyclic amine, at each terminal position of the oligomer backbone.

In still an even more advantageous aspect of the disclosure, the cyclic amine for use herein is selected from the group consisting of aziridines, azetidines, pyrrolidines, piperidines, and any combinations or mixtures thereof.

In a particularly advantageous aspect of the disclosure, the cyclic amine for use herein is selected from the group consisting of aziridines.

In still another particularly advantageous aspect of the disclosure, the multi-functional oligomeric branching compound for use herein is a bis-aziridino compound.

According to one preferred aspect, the multi-functional oligomeric branching compound for use in the present disclosure comprises an oligomer backbone comprising (or consisting of) a polyether and at least one aziridine functional group at each terminal position of the oligomer backbone, wherein the polyether oligomer backbone is obtained by copolymerization of propylene oxide units. Advantageously, the polyether oligomer backbone for use herein is obtained by copolymerization of tetrahydrofuran units, ethylene oxide units, and any combinations or mixtures thereof.

According to another preferred aspect, the multi-functional oligomeric branching compound for use in the present disclosure has the following formula: 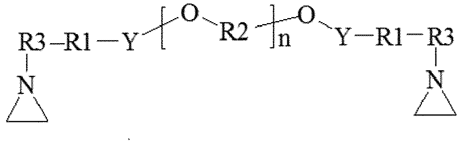 wherein:
R¹ is a covalent bond or an alkylene group;
each R² is independently selected from the group consisting of (linear) alkylene groups;
R³ is a straight chain or branched alkylene groups;
Y is a divalent linking group;
and n is an integer selected such that the average molecular weight of the multi-functional oligomeric branching (grafting) compound is greater than 250 g/mol.

According to still another preferred aspect, the multi-functional oligomeric branching compound for use in the present disclosure has the following formula: 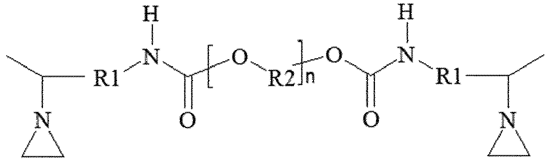 wherein:
R¹ is an alkylene group;
each R² is independently selected from the group consisting of (linear) alkylene groups having 2 to 6 carbon atoms; and
n is an integer selected such that the average molecular weight of the multi-functional oligomeric branching (grafting) compound is greater than 250 g/mol.

According to still another preferred aspect, the multi-functional oligomeric branching compound for use herein has the following formula: 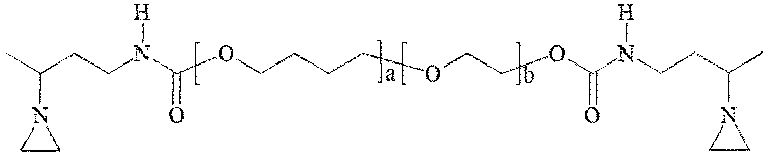 wherein a and b are integers greater than or equal to 1, and the sum of a and b is equal to n.

According to an alternatively preferred aspect, the multi-functional oligomeric branching compound for use in the present disclosure comprises at least one carbodiimide, at each terminal position of the oligomer backbone.

In a typical aspect of this particular execution, the (meth)acrylate-based (co)polymeric base component comprises from 0.01 to 5 wt.%, from 0.05 to 5 wt.%, from 0.05 to 4 wt.%, 4, from 0.1 to 4 wt.%, from 0.1 to 3 wt.%, from 0.2 to 3 wt.%, from 0.2 to 2.5 wt.%, from 0.2 to 2.0 wt.%, from 0.2 to 1.5 wt.%, or even from 0.2 to 1.0 wt.%, of the multi-functional oligomeric branching compound, wherein the weight percentages are based on the total weight of the (meth)acrylate-based (co)polymeric base component.

In another typical aspect, the foamable precursor of the present disclosure comprises from 20 to 98 wt.%, from 20 to 95 wt.%, from 20 to 99 wt.%, from 30 to 90 wt.%, from 40 to 85 wt.%, from 50 to 85 wt.%, from 60 to 85 wt.%, from 65 to 85 wt.%, or even from 70 to 85 wt.%, of the (meth)acrylate-based (co)polymeric base component having a glass transition temperature (Tg) no greater than 20°C, wherein the weight percentages are based on the total weight of the foamable precursor.

The foamable precursor of a microcellular foamed polymeric composition comprises as a second component a thermoplastic polymeric material having a Vicat softening temperature greater than 20°C, when measured according to test method ASTM D1525-09.

Thermoplastic polymeric materials for use herein are not particularly limited, as long as they meet the above-mentioned Vicat softening temperature requirement. Suitable thermoplastic polymeric materials for use herein may be easily identified by those skilled in the art, in the light of the present disclosure.

In one advantageous aspect, the thermoplastic polymeric material for use herein has a Vicat softening temperature greater than 25°C, greater than 30°C, greater than 40°C, greater than 50°C, greater than 60°C, greater than 70°C, greater than 80°C, greater than 90°C, greater than 100°C, or even greater than 110°C, when measured according to test method ASTM D1525-09.

In another advantageous aspect, the thermoplastic polymeric material has a Vicat softening temperature no greater than 200°C, no greater than 180°C, no greater than 160°C, no greater than 150°C, no greater than 140°C, no greater than 130°C, no greater than 120°C, no greater than 110°C, no greater than 100°C, no greater than 90°C, or even no greater than 80°C, when measured according to test method ASTM D1525-09.

In still another advantageous aspect, the thermoplastic polymeric material has a Vicat softening temperature in a range from 25°C to 180°C, from 25°C to 160°C, from 30°C to 150°C, from 30°C to 140°C, from 40°C to 140°C, from 40°C to 120°C, from 45°C to 110°C, from 45°C to 100°C, from 45°C to 95°C, or even from 50°C to 95°C, when measured according to test method ASTM D1525-09.

In still another advantageous aspect, the thermoplastic polymeric material has a Vicat softening temperature in a range from 25°C to 150°C, from 25°C to 100°C, from 30°C to 100°C, from 30°C to 90°C, from 40°C to 90°C, from 40°C to 80°C, from 45°C to 80°C, from 50°C to 80°C, or even from 50°C to 70°C, when measured according to test method ASTM D1525-09.

According to one typical aspect, the thermoplastic polymeric material for use herein is a hot melt processable polymeric composition.

According to one advantageous aspect, the thermoplastic polymeric material is selected from the group consisting of amorphous thermoplastic polymeric materials, semi-crystalline thermoplastic polymeric materials, and any combinations or mixtures thereof.

According to another advantageous aspect, the thermoplastic polymeric material is selected from the group consisting of thermoplastic elastomer polymeric materials, thermoplastic non-elastomer polymeric materials, and any combinations or mixtures thereof.

According to still another advantageous aspect, the thermoplastic polymeric material for use herein is selected from the group consisting of thermoplastic random polymeric materials, thermoplastic block polymeric materials, and any combinations or mixtures thereof.

According to still another advantageous aspect, the thermoplastic polymeric material for use herein is selected from the group consisting of polystyrenes, polymethacrylics, alkylene-vinyl acetate copolymers, polycarbonates, rubber-based elastomeric materials, rubber-based non-elastomeric materials, polyacrylonitriles, polyvinyl chlorides, polyvinyl acetates, polyvinyl butyrates, polyvinyl alcohols, acrylonitrile butadiene styrene, alkylene-acrylic acid copolymers, polybutylene terephthalate, polyurethanes, polyesters, polyethers, polyamides, polylactides, polyolefins, polyphenylene oxides, styrenic block copolymers, polyetherimides, epoxy-based polymers, fluorinated polymers, cellulose-based polymers, starch, and any combinations or mixtures thereof.

According to a more advantageous aspect, the thermoplastic polymeric material is selected from the group consisting of polystyrenes, polymethacrylics, alkylene-vinyl acetate copolymers, rubber-based elastomeric materials, rubber-based non-elastomeric materials, and any combinations or mixtures thereof.

According to a more advantageous aspect, the thermoplastic polymeric material is selected from the group consisting of polystyrenes; polymethacrylics, in particular polymethylmethacrylate; alkylene-vinyl acetate copolymers, in particular ethylene-vinyl acetate copolymers, and any combinations or mixtures thereof.

According to a particularly preferred aspect, the thermoplastic polymeric material for use herein is selected from the group consisting of polystyrenes, polymethylmethacrylate, ethylene-vinyl acetate copolymers, and any combinations or mixtures thereof.

In a particular aspect of the present disclosure, the thermoplastic polymeric material for use herein, in particular an amorphous thermoplastic polymeric material, has a glass transition temperature (Tg) greater than 25°C, greater than 30°C, greater than 40°C, greater than 50°C, greater than 60°C, greater than 70°C, greater than 80°C, greater than 90°C, or even greater than 100°C, when measured by DSC according to test method ASTM D3418-15.

In another particular aspect of the present disclosure, the thermoplastic polymeric material for use herein, in particular an amorphous thermoplastic polymeric material, has a glass transition temperature (Tg) no greater than 200°C, no greater than 180°C, no greater than 160°C, no greater than 150°C, no greater than 140°C, no greater than 130°C, no greater than 120°C, or even no greater than 110°C, when measured by DSC according to test method ASTM D3418-15.

In still another particular aspect of the present disclosure, the thermoplastic polymeric material for use herein, in particular an amorphous thermoplastic polymeric material, has a glass transition temperature (Tg) in a range from 25°C to 180°C, from 30°C to 150°C, from 40°C to 140°C, from 50°C to 130°C, from 60°C to 120°C, from 80°C to 110°C, or even from 90°C to 110°C, when measured by DSC according to test method ASTM D3418-15.

In an alternative particular aspect, the thermoplastic polymeric material, in particular a semi-crystalline thermoplastic polymeric material, has a melting temperature (Tm) greater than 25°C, greater than 30°C, greater than 40°C, greater than 50°C, greater than 60°C, greater than 70°C, greater than 80°C, greater than 90°C, greater than 100°C, greater than 110°C, or even greater than 120°C, when measured by DSC according to test method ASTM D3418-15.

In another particular aspect, the thermoplastic polymeric material, in particular a semi-crystalline thermoplastic polymeric material, has a melting temperature (Tm) no greater than 200°C, no greater than 180°C, no greater than 160°C, no greater than 140°C, no greater than 120°C, no greater than 100°C, or even no greater than 80°C, when measured by DSC according to test method ASTM D3418-15.

In still another particular aspect of the present disclosure, the thermoplastic polymeric material, in particular a semi-crystalline thermoplastic polymeric material, has a melting temperature (Tm) in a range from 25°C to 180°C, from 30°C to 160°C, from 40°C to 140°C, from 50°C to 120°C, from 50°C to 100°C, from 60°C to 100°C, or even from 60°C to 90°C, when measured by DSC according to test method ASTM D3418-15.

According to a typical aspect, the foamable precursor of the disclosure comprises from 1 to 75 wt.%, from 2 to 75 wt.%, from 5 to 70 wt.%, from 5 to 65 wt.%, from 5 to 60 wt.%, from 5 to 55 wt.%, from 5 to 50 wt.%, from 10 to 50 wt.%, from 10 to 40 wt.%, from 10 to 30 wt.%, from 10 to 25 wt.%, or even from 15 to 25 wt.%, of the thermoplastic polymeric material having a Vicat softening temperature greater than 20°C, wherein the weight percentages are based on the total weight of the foamable precursor.

According to one advantageous aspect, the foamable precursor of the disclosure may further comprise a polymeric blend compatibilizer.

In the context of the present disclosure, it has been found that the use of a polymeric blend compatibilizer as part of the foamable precursor, not only improves the chemical compatibility between the (meth)acrylate-based (co)polymeric base component and thermoplastic polymeric material, but also advantageously impacts the overall processing conditions and the foaming process in particular, which ultimately translates into microcellular foamed polymeric compositions provided with improved characteristics and performance attributes.

In one exemplary aspect, the polymeric blend compatibilizer for use herein is selected from the group consisting of acrylic block copolymers, maleic anhydride functionalized poly(meth)acrylic copolymers, and any combinations or mixtures thereof.

In one advantageous aspect, the polymeric blend compatibilizer is selected from the group consisting of acrylate tri-block copolymers comprising polymethylmethacrylate (outer) blocks and poly(n-butylacrylate) (inner) blocks, and any combinations or mixtures thereof.

The use of a polymeric blend compatibilizer as described above has been found to be particularly advantageous, when the thermoplastic polymeric material having a Vicat softening temperature greater than 20°C is selected from the group of polymethacrylic (co)polymers, in particular polymethylmethacrylate.

In a typical aspect of the disclosure, the foamable precursor may comprise from 0 to 20 wt.%, from 1 to 15 wt.%, from 2 to 15 wt.%, from 3 to 15 wt.%, or even from 5 to 15 wt.%, of a polymeric blend compatibilizer, wherein the weight percentages are based on the total weight of the foamable precursor.

In one particular aspect of the disclosure, the foamable precursor of a microcellular foamed polymeric composition comprises a physical foaming agent.

Physical foaming agents for use herein are not particularly limited. Any physical foaming agents commonly known in the art may be formally used in the context of the present disclosure. Suitable physical foaming agents for use herein may be easily identified by those skilled in the art, in the light of the present disclosure.

In an advantageous aspect of the present disclosure, the physical foaming agent for use herein is selected from the group consisting of carbon dioxide, nitrogen, SF6, nitrous oxide, perfluorinated fluids, hydrofluorocarbons, hydrochlorofluorocarbons, hydrocarbons (such as e.g. heptane, pentane), argon, helium, noble gases, air (nitrogen and oxygen blend), and any combinations or mixtures thereof.

In a more advantageous aspect, the physical foaming agent for use herein is selected from the group consisting of carbon dioxide, nitrogen, air, and any combinations or mixtures thereof.

According to a preferred aspect of the disclosure, the physical foaming agent for use herein is selected to comprise carbon dioxide. More preferably, the physical foaming agent for use herein consists (essentially) of carbon dioxide.

According to one particular aspect, the physical foaming agent for use herein is produced in situ by the decomposition of a chemical blowing agent. Advantageously, the chemical blowing agent for use herein is selected from the group consisting of carbonate / acid blends, azodicarbonamide, and any combinations or mixtures thereof. More advantageously, the chemical blowing agent for use herein is selected to comprise sodium bicarbonate and citric acid blends.

In one preferred aspect of the disclosure, the physical foaming agent for use herein is present in the precursor in supercritical conditions, in particular in pressure and temperature conditions greater than the supercritical pressure (Pc) and the supercritical temperature (Tc) conditions for the physical foaming agent.

In an alternative aspect of the disclosure, the physical foaming agent for use herein is present in the precursor below supercritical conditions, in particular in pressure and temperature conditions below the supercritical pressure (Pc) and the supercritical temperature (Tc) conditions for the physical foaming agent.

In a typical aspect, the foamable precursor of the present disclosure comprises from 0 to 5 wt.%, from 0.01 to 5 wt.%, from 0.05 to 5 wt.%, from 0.1 to 5 wt.%, from 0.1 to 4 wt.%, from 0.1 to 3 wt.%, from 0.2 to 3 wt.%, from 0.5 to 3 wt.%, from 0.5 to 2.5 wt.%, or even from 0.5 to 2 wt.%, of the physical foaming agent, wherein the weight percentages are based on the total weight of the foamable precursor.

According to an advantageous execution, the foamable precursor of the present disclosure comprises:
a) from 20 to 98 wt.%, from 20 to 95 wt.%, from 20 to 90 wt.%, from 30 to 90 wt.%, from 40 to 85 wt.%, from 50 to 85 wt.%, from 60 to 85 wt.%, from 65 to 85 wt.%, or even from 70 to 85 wt.%, of the (meth)acrylate-based (co)polymeric base component having a glass transition temperature (Tg) no greater than 20°C, when measured by Differential Scanning Calorimetry (DSC) according to test method ASTM D3418-15; and
b) from 1 to 75 wt.%, from 2 to 75 wt.%, from 5 to 70 wt.%, from 5 to 65 wt.%, from 5 to 60 wt.%, from 5 to 55 wt.%, from 5 to 50 wt.%, from 10 to 50 wt.%, from 10 to 40 wt.%, from 10 to 30 wt.%, from 10 to 25 wt.%, or even from 15 to 25 wt.%, of the thermoplastic polymeric material having a Vicat softening temperature greater than 20°C, when measured according to test method ASTM D1525-09;
c) optionally, from 0 to 5 wt.%, from 0.01 to 5 wt.%, from 0.05 to 5 wt.%, from 0.1 to 5 wt.%, from 0.1 to 4 wt.%, from 0.1 to 3 wt.%, from 0.2 to 3 wt.%, from 0.5 to 3 wt.%, from 0.5 to 2.5 wt.%, or even from 0.5 to 2 wt.%, of the physical foaming agent;
d) optionally, from 0 to 20 wt.%, from 0.5 to 15 wt.%, from 0.5 to 10 wt.%, from 1 to 10 wt.%, from 1 to 8 wt.%, from 2 to 8 wt.%, or even from 2 to 6 wt.%, of a nucleating agent; and
e) optionally, from 0 to 20 wt.%, from 1 to 15 wt.%, from 2 to 15 wt.%, from 3 to 15 wt.%, or even from 5 to 15 wt.%, of a polymeric blend compatibilizer;
wherein the weight percentages are based on the total weight of the foamable precursor.

According to another advantageous execution, the foamable precursor of the present disclosure is a foamable precursor of a microcellular pressure sensitive adhesive foamed polymeric composition.

In another aspect, the present disclosure is directed to a process of manufacturing a microcellular foamed polymeric composition, comprising the steps of:
a) providing a foamable precursor of a microcellular foamed polymeric composition as described above;
b) optionally, providing a physical foaming agent as described above;
c) allowing the physical foaming agent to foam the foamable precursor of a microcellular foamed polymeric composition, thereby obtaining a microcellular foamed polymeric composition; and
d) optionally, crosslinking the microcellular foamed polymeric composition.

In an advantageous aspect, this process comprises the steps of:
a) providing a mixing apparatus;
b) incorporating and mixing the foamable precursor composition in the mixing apparatus;
c) optionally, subjecting the foamable precursor to a heating step;
d) optionally, subjecting the foamable precursor to a devolatilization step;
e) removing the foamable precursor from the mixing apparatus;
f) optionally, shaping the foamable precursor of a microcellular foamed polymeric composition, thereby forming a shaped foamable precursor of a microcellular foamed polymeric composition;
g) incorporating the (shaped) foamable precursor of a microcellular foamed polymeric composition into a reactor;
h) optionally, subjecting the (shaped) foamable precursor to a heating step and/or to a pressurizing step;
i) optionally, incorporating the physical foaming agent into the reactor;
j) allowing the physical foaming agent to foam the (shaped) foamable precursor of a microcellular foamed polymeric composition, thereby obtaining a microcellular foamed polymeric composition; and
k) optionally, crosslinking the microcellular foamed polymeric composition.

In another advantageous aspect, this process comprises the steps of subjecting the foamable precursor to any of devolatilization steps or (melt) degassing steps, in particular using entrainers or vacuum, VOC scavengers, solvent concentration steps, solvent stripping-off steps, solvent recycling steps, steam distillation steps, solvent distillation steps, and any combinations thereof.

In an advantageous aspect of the process of manufacturing a microcellular foamed polymeric composition, the process is continuous and comprises the steps of:
a) providing a mixing apparatus;
b) incorporating and mixing the foamable precursor composition in the mixing apparatus;
c) optionally, degassing the foamable precursor composition, in particular while the foamable precursor composition is still in the mixing apparatus;
d) optionally, exposing the foamable precursor composition to increased pressure and temperature conditions, in particular to pressure and temperature conditions greater than the supercritical pressure (P_{c}) and the supercritical temperature (T_{c}) conditions for the physical foaming agent;
e) optionally, providing the physical foaming agent into the mixing apparatus;
f) mixing the foamable precursor composition and the physical foaming agent (provided in supercritical conditions) in the mixing apparatus;
g) optionally, reducing the pressure and/or temperature conditions of the foamable precursor composition, whereby the pressure and temperature conditions are still greater than the supercritical pressure (P_{c}) and the supercritical temperature (T_{c}) conditions for the physical foaming agent;
h) allowing the physical foaming agent to foam the foamable precursor of a microcellular foamed polymeric composition, in particular by exposing the foamable precursor composition to a reduced pressure (in particular atmospheric pressure), whereby the physical foaming agent expands resulting in foaming of the foamable precursor of the microcellular foamed polymeric composition, and thereby obtaining a microcellular foamed polymeric composition; and
i) optionally, crosslinking the microcellular foamed polymeric composition.

In a further advantageous aspect of the process of manufacturing a microcellular foamed polymeric composition, the foamable precursor for use herein is a hot melt processable polymeric composition.

Mixing apparatus for use herein are not particularly limited. Any mixing apparatus comprising a reaction chamber and commonly known in the art may be used in the context of the present disclosure. Suitable mixing apparatus for use herein may be easily identified by those skilled in the art in the light of the present disclosure.

According to an advantageous aspect of the present disclosure, the mixing apparatus for use herein is a hot melt mixing apparatus.

According to a more advantageous aspect of the process, the mixing apparatus for use herein comprises an extrusion apparatus which is in particular selected from the group of single- and multi-screw extruders, static- and dynamic-mixers, and any combinations thereof.

According to a preferred aspect, the extrusion apparatus for use herein is selected from the group consisting of single screw extruders, twin screw extruders, planetary roller extruders, ring extruders, and any combinations thereof.

According to a more preferred aspect, the extrusion apparatus for use herein is selected from the group consisting of co-rotating multi-screw extruders, counter-rotating multi-screw extruders, and any combinations thereof.

According to one particularly advantageous aspect of the disclosure, the extrusion apparatus is a twin-screw extruder, in particular a co-rotating twin-screw extruder.

According to another particularly advantageous aspect of the disclosure, the extrusion apparatus is a planetary roller extruder comprising in particular a center spindle and multiple planetary gear spindles with center spindle and planetary gear spindles featuring a screw like geometry.

In a typical aspect of the disclosure, the mixing apparatus further comprises a foaming (and shaping) equipment arranged downstream of the extrusion apparatus.

According to this particular execution, the step of allowing the physical foaming agent to foam the foamable precursor of a microcellular foamed polymeric composition is advantageously performed by passing the foamable precursor composition through the foaming (and shaping) equipment and exposing the composition to a reduced pressure in particular atmospheric pressure), whereby the physical foaming agent expands resulting in foaming of the precursor of a foamed polymeric composition, in particular at the time it exits the foaming (and shaping) equipment.

According to a particularly advantageous aspect of the disclosure, the mixing apparatus for use in the process of manufacturing a microcellular foamed polymeric composition comprises:
a) an extrusion apparatus;
b) a melt (gear) pump arranged (directly) downstream of the extrusion apparatus;
c) optionally, a fluid feeding equipment;
d) a static cooling mixer equipment arranged (directly) downstream of the melt pump; and
e) a foaming equipment arranged (directly) downstream of the static cooling mixer equipment.

According to another particularly advantageous aspect of the disclosure, the mixing apparatus for use herein further comprises a fluid (gas) feeding equipment (injection port) which is in particular in fluid connection with the static cooling mixer equipment, more in particular with the static (injection) mixer.

According to another particularly advantageous aspect of the disclosure, the mixing apparatus for use herein further comprises degassing means, in particular vacuum pumps or vacuum degassing units. Advantageously, the degassing means are in fluid connection with the extrusion apparatus, in particular with the downstream section of the extrusion apparatus.

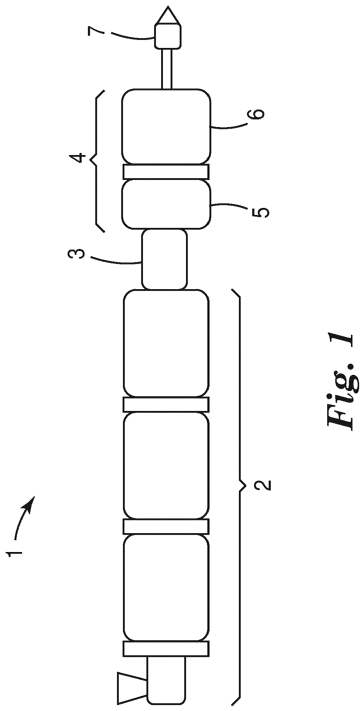

**FIG. 1** illustrates a schematic side view of an exemplary mixing apparatus **1** according to one aspect of the present disclosure, wherein the apparatus comprises a co-rotating twin screw extruder **2,** a melt pump **3** arranged directly downstream of the extruder **2,** a static cooling mixer equipment **4** which is arranged directly downstream of the melt pump **3** and comprising a static mixer **5** and a cooling mixer **6,** and wherein the extrusion apparatus **1** further comprises a foaming equipment **7** arranged directly downstream of the static cooling mixer equipment **4.**

In the context of the present disclosure, it has been surprisingly found that extrusion apparatus as described above is particularly suitable for forming a microcellular foamed polymeric composition provided with excellent characteristics and performance as to overall VOC levels reduction.

Without wishing to be bound by theory, it is believed that the use of the mixing apparatus as described above, in particular the use of the four constituting elements of the apparatus (i.e. the extrusion apparatus, the melt pump, the optional fluid feeding equipment, the static cooling mixer and the foaming equipment) arranged in the very specific sequence as detailed above, advantageously impacts the overall VOC levels reduction characteristics and performance.

In the context of the present disclosure, it has been further surprisingly found that mixing apparatus as described above is outstandingly suitable for the foaming of a polymeric composition with a physical foaming agent which is in particular provided in supercritical conditions of the physical foaming agent.

In a typical aspect of the process of manufacturing a microcellular foamed polymeric composition, the step of mixing the foamable precursor composition and the physical foaming agent in the mixing apparatus is performed in such pressure and temperature conditions sufficient for the physical foaming agent to be uniformly distributed throughout the foamable precursor composition.

In an advantageous aspect, the physical foaming agent is provided and mixed with the foamable precursor composition in supercritical conditions of the physical foaming agent, in particular in pressure and temperature conditions greater than the supercritical pressure (P_{c}) and the supercritical temperature (T_{c}) conditions for the physical foaming agent.

According to a particular aspect of the process, the supercritical pressure (P_{c}) is greater than 6.5 MPa, greater than 7 MPa, greater than 7.5 MPa, greater than 8 MPa, greater than 10 MPa, greater than 12 MPa, greater than 14 MPa, greater than 16 MPa, greater than 18 MPa, greater than 20 MPa, greater than 23 MPa, greater than 25 MPa, or even greater than 28 MPa.

According to more particular aspect, the supercritical pressure (P_{c}) is in a range from 7 to 30 MPa, from 7.5 to 30 MPa, from 8 to 28 MPa, from 10 to 28 MPa, or even from 10 to 26 MPa.

According to another particular aspect of the process of manufacturing a microcellular foamed polymeric composition, the supercritical temperature (T_{c}) is greater than 60°C, greater than 70°C, greater than 80°C, greater than 90°C, greater than 100°C, greater than 120°C, greater than 140°C, greater than 150°C, greater than 160°C, greater than 180°C, greater than 200°C, or even greater than 210°C.

According to still another particular aspect, the supercritical temperature (T_{c}) is no greater than 220°C, no greater than 200°C, no greater than 190°C, no greater than 180°C, no greater than 160°C, no greater than 150°C, or even no greater than 140°C.

According to yet another particular aspect of the disclosure, the supercritical temperature (T_{c}) is in a range from 65 to 220°C, from 65 to 200°C, from 65 to 180°C, from 70 to 160°C, from 70 to 150°C, from 80 to 150°C, or even from 90 to 150°C.

In an advantageous aspect of the process, the step of reducing the pressure and temperature of the foamable precursor composition, whereby the pressure and temperature conditions are still greater than the supercritical pressure (P_{c}) and the supercritical temperature (T_{c}) conditions for the physical foaming agent, is performed such that the reduced temperature is no greater than 220°C, no greater than 200°C, no greater than 190°C, no greater than 180°C, no greater than 160°C, no greater than 150°C, no greater than 140°C, no greater than 120°C, no greater than 100°C, no greater than 90°C, no greater than 80°C, no greater than 70°C, or even no greater than 60°C.

In another advantageous aspect of the process, the step of reducing the pressure and temperature conditions of the foamable precursor composition, whereby the pressure and temperature conditions are still greater than the supercritical pressure (P_{c}) and the supercritical temperature (T_{c}) conditions for the physical foaming agent, is performed such that the reduced pressure is no greater than 20 MPa, no greater than 18 MPa, no greater than 16 MPa, no greater than 14 MPa, no greater than 12 MPa, or even no greater than 10 MPa.

According to a typical aspect of the process, the step of passing the foamable precursor composition through the foaming (and shaping) equipment and exposing the composition to a reduced pressure, is performed at (about) atmospheric pressure (101.3 kPa).

According to another typical aspect of the process, the step of passing the foamable precursor composition through the foaming (and shaping) equipment and exposing the composition to a reduced pressure, is performed at a temperature no greater than 220°C, no greater than 200°C, no greater than 180°C, no greater than 150°C, no greater than 120°C, no greater than 110°C, no greater than 100°C, no greater than 90°C, no greater than 80°C, or even no greater than 60°C.

According to still another typical aspect of the process, the step of passing the foamable precursor composition through the foaming (and shaping) equipment and exposing the composition to a reduced pressure, is performed at a temperature in a range from 30 to 220°C, from 30 to 200°C, from 30 to 180°C, from 30 to 160°C, from 30 to 150°C, from 30 to 140°C, from 30 to 120°C, from 30 to 110°C, from 40 to 100°C, from 50 to 100°C, from 60 to 100°C, from 60 to 95°C, from 70 to 95°C, or even from 70 to 90°C.

According to yet another typical aspect of the process, the step of passing the foamable precursor composition through the foaming (and shaping) equipment and exposing the composition to a reduced pressure causes nucleation of the physical foaming agent and cell formation within the foamable precursor composition.

According to an advantageous aspect of the present disclosure, the process of manufacturing a microcellular foamed polymeric composition further comprises the step of crosslinking the microcellular foamed polymeric composition.

In the context of the present disclosure, it has been surprisingly found that the step of subjecting the microcellular foamed polymeric composition of the present disclosure to a crosslinking step advantageously impacts the long-term stability of foam microstructure of the foamed polymeric composition.

Without wishing to be bound by theory, it is believed that the crosslinking step has the ability to freeze and strengthen the foam microstructure present in the microcellular foamed polymeric composition.

It has further surprisingly been found that the additional crosslinking step allows using lower amounts of the thermoplastic polymeric material and the physical foaming agent in the process of manufacturing the microcellular foamed polymeric composition.

According to an advantageous aspect of the process, the step of crosslinking the microcellular foamed polymeric composition is performed by exposing the microcellular foamed polymeric composition to radiations selected from the group consisting of ionizing radiations, actinic radiations, and any combinations or mixtures thereof. More advantageously, the radiations for use herein are selected from the group consisting of UV radiations, electron-beam radiations, beta radiations, gamma radiations, x-ray radiations, and any combinations or mixtures thereof.

According to a more advantageous aspect of the process, the step of crosslinking the microcellular foamed polymeric composition is performed by exposing the microcellular foamed polymeric composition to electron-beam radiations.

According to an even more advantageous aspect of the process, the step of crosslinking the microcellular foamed polymeric composition is performed by exposing the microcellular foamed polymeric composition to a cumulative electron-beam dosage in a range from 2 to 30 Mrad, from 4 to 30 Mrad, from 6 to 30 Mrad, from 8 to 30 Mrad, from 10 to 30 Mrad, from 10 to 25 Mrad, or even from 15 to 25 Mrad.

According to an alternatively advantageous aspect of the process, the step of crosslinking the microcellular foamed polymeric composition is performed by using a chemical crosslinking agent, in particular selected from the group consisting of peroxide-based crosslinking agents, epoxy-based crosslinking agents, isocyanate-based crosslinking agents, ionic crosslinking agents, and any combinations or mixtures thereof.

In another aspect, the present disclosure is further directed to a process of stabilizing the microcellular structure of a foamable precursor of a foamed polymeric composition, wherein the foamable precursor comprises:
a) a (meth)acrylate-based (co)polymeric base component having a glass transition temperature (Tg) no greater than 20°C, when measured by Differential Scanning Calorimetry (DSC) according to test method ASTM D3418-15; and
b) optionally, a physical foaming agent;
wherein the process comprises the step of including a thermoplastic polymeric material having a Vicat softening temperature greater than 20°C, when measured according to test method ASTM D1525-09, into the foamable precursor.

All the particular and preferred aspects relating to, in particular, the (meth)acrylate-based (co)polymeric base component, the thermoplastic polymeric material and the physical foaming agent, which were described hereinabove in the context of the foamable precursor of a microcellular foamed polymeric composition, are fully applicable to the process of manufacturing a microcellular foamed polymeric composition and to the process of stabilizing the microcellular structure of a foamable precursor of a foamed polymeric composition.

Moreover, all the particular and preferred aspects relating to, in particular, the various process steps, which were described hereinabove in the context of the process of manufacturing a microcellular foamed polymeric composition, are fully applicable to the process of stabilizing the microcellular structure of a foamable precursor of a foamed polymeric composition.

According to still another aspect, the present disclosure relates to a microcellular foamed polymeric composition obtained (or obtainable) from the process as described above.

According to an advantageous aspect of the present disclosure, the foamed polymeric composition has an average cell size (diameter) no greater than 200 micrometers, no greater than 180 micrometers, no greater than 160 micrometers, no greater than 140 micrometers, no greater than 120 micrometers, no greater than 100 micrometers, no greater than 80 micrometers, no greater than 70 micrometers, no greater than 60 micrometers, no greater than 50 micrometers, no greater than 40 micrometers, no greater than 30 micrometers, no greater than 20 micrometers, or even no greater than 10 micrometers, when determined by scanning electron microscopy according to ASTM D3576.

According to another advantageous aspect, the foamed polymeric composition of the disclosure has an average cell size (diameter) in a range from 5 to 200 micrometers, from 5 to 180 micrometers, from 5 to 160 micrometers, from 10 to 140 micrometers, from 20 to 120 micrometers, from 30 to 100 micrometers, or even from 50 to 100 micrometers, when determined by scanning electron microscopy according to ASTM D3576.

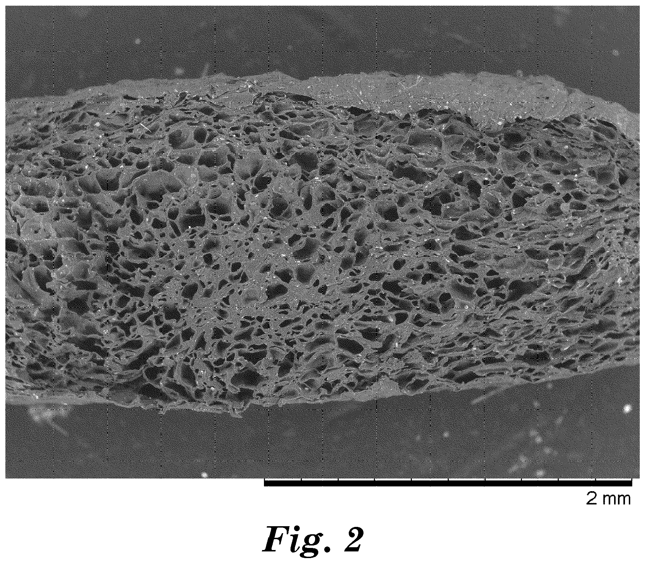

The foam microstructure of an exemplary microcellular foamed polymeric composition according to one aspect of the present disclosure is represented in **FIG. 2****,** which is a scanning electron microscope image of a cross section of a layer of such exemplary microcellular foamed polymeric composition.

According to still another advantageous aspect, the foamed polymeric composition has a cell size distribution polydispersity in a range from 1.0 to 2.0, or even from 1.0 to 1.5.

According to yet another advantageous aspect, the foamed polymeric composition has a cell density greater than 1.10⁵ cells/cm³, greater than 1.10⁶ cells/cm³, greater than 1.10⁷ cells/cm³, or even greater than 1.10⁸ cells/cm³ when determined by scanning electron microscopy according to ASTM D3576.

According to yet another advantageous aspect, the foamed polymeric composition has a foam density no greater than 1.0 g/cm³, no greater than 0.8 g/cm³, no greater than 0.6 g/cm³, no greater than 0.5 g/cm³, or even no greater than 0.4 g/cm³, when determined according to ASTM D792.

In a beneficial aspect, the foamed polymeric composition has a maximum compression value greater than 30%, greater than 35%, greater than 40%, greater than 45%, greater than 50%, greater than 55%, greater than 60%, greater than 65%, or even greater than 70%, when determined according to the compression test method described in the experimental section.

In another beneficial aspect, the foamed polymeric composition has an elongation at break value greater than 200%, greater than 250%, greater than 300%, greater than 350%, greater than 400%, greater than 450%, or even greater than 500%, when determined according to the tensile stress relaxation test method described in the experimental section.

In still another beneficial aspect, the foamed polymeric composition of the present disclosure has a peel adhesion value greater than 3 N/cm, greater than 4 N/cm, greater than 5 N/cm, greater than 6 N/cm, greater than 7 N/cm, greater than 8 N/cm, or even greater than 9 N/cm, when measured according to the 90° peel adhesion test method described in the experimental section.

In yet another beneficial aspect, the foamed polymeric composition has a Volatile Organic Compound (VOC) value of less than 1000 ppm, less than 800 ppm, less than 600 ppm, less than 500 ppm, less than 400 ppm, less than 300 ppm, less than 200 ppm, less than 150 ppm, less than 120 ppm, less than 100 ppm, less than 80 ppm, less than 60 ppm, less than 50 ppm, or even less than 40 ppm, when measured by thermal desorption analysis according to test method VDA278.

In yet another beneficial aspect, the foamed polymeric composition has a Volatile Fogging Compound (FOG) value of less than 1000 ppm, less than 800 ppm, less than 600 ppm, less than 500 ppm, less than 400 ppm, less than 350 ppm, less than 300 ppm, less than 250 ppm, less than 200 ppm, less than 150 ppm, less than 120 ppm, or even less than 100 ppm, when measured by thermal desorption analysis according to test method VDA278.

According to a particularly advantageous aspect of the disclosure, the foamed polymeric composition is a foamed pressure sensitive adhesive composition.

According to still another aspect, the present disclosure relates to an assembly comprising a microcellular foamed polymeric composition layer as described above.

A foamed polymeric composition layer for use in an assembly has for example a thickness comprised between 100 and 6000 micrometers, between 200 and 4000 micrometers, between 500 and 2000 micrometers, or even between 800 and 1500 micrometers. As will be apparent to those skilled in the art, in the light of the present description, the preferred thickness of the polymeric foam layer will be dependent on the intended application.

According to an advantageous aspect, the microcellular foamed polymeric composition layer for use in an assembly according to the present disclosure has a thickness no greater than 500 micrometers, no greater than 400 micrometers, no greater than 300 micrometers, no greater than 200 micrometers, or even no greater than 100 micrometers.

In a particular aspect, the assembly of the present disclosure is in the form of a multilayer assembly further comprising a second polymeric layer adjacent to the foamed polymeric composition layer.

According to the particular execution wherein the multilayer assembly further comprises a second polymeric layer adjacent to the foamed polymeric composition layer, the multilayer assembly of the present disclosure may advantageously take the form of skin/core type multilayer assembly, wherein the foamed polymeric composition layer is the core layer of the multilayer assembly and the second polymeric layer is the skin layer of the multilayer assembly. This particular execution is commonly referred to as a dual layer polymeric foam assembly. Skin/core type of multilayer assemblies are well known to those skilled in the art.

Multilayer assemblies according to the present disclosure, and in particular dual layer polymeric foam assemblies, are particularly advantageous when compared to single-layer constructions, in that properties/requirements of the overall assembly such as application issues, deforming issues and energy distribution may be addressed by appropriate formulation of the polymeric foam layer (also commonly referred to as the core layer), while other properties such as e.g. adhesion (quick adhesion) can be adjusted by the formulation of the second polymeric layer (also commonly referred to as the skin layer).

In one particular aspect, it may be advantageous for the multilayer assemblies of the present disclosure to further comprise a third polymeric layer which is preferably adjacent to the foamed polymeric layer in the side of the foamed polymeric layer which is opposed to the side of the foamed polymeric layer adjacent to the second polymeric layer, and thereby forming a three-layered multilayer assembly.

Three-layered multilayer assemblies according to one aspect of the disclosure, may advantageously take the form of a skin/core/skin multilayer assembly, wherein the foamed polymeric layer is the core layer of the multilayer assembly, the second polymeric layer is the first skin layer of the multilayer assembly and the third polymeric layer is the second skin layer of the multilayer assembly.

According to one exemplary aspect, the multilayer assembly of the present disclosure is a multilayer pressure sensitive adhesive assembly, wherein the foamed polymeric layer and/or the second polymeric layer and/or the third polymeric layer are layers based on pressure sensitive adhesive compositions.

According to another exemplary aspect, the multilayer assembly of the present disclosure is a multilayer pressure sensitive adhesive assembly, wherein the foamed polymeric layer is not based on a pressure sensitive adhesive composition and the second polymeric layer and the third polymeric layer are layers based on pressure sensitive adhesive compositions.

In the context of the present disclosure, any combinations of pressure sensitive adhesive -based and non- pressure sensitive adhesive-based layers may be comprised in the multilayer assemblies of the present disclosure.

Multilayer assemblies as described herein may be produced according to techniques well known to those skilled in the art, such as e.g. by co-extrusion.

The assemblies of the present disclosure can be coated/applied upon a variety of substrates to produce adhesive-coated articles. The substrates can be flexible or inflexible and be formed of a polymeric material, glass or ceramic material, metal, or combinations thereof. Suitable polymeric substrates include, but are not limited to, polymeric films such as those prepared from polypropylene, polyethylene, polyvinyl chloride, polyester (polyethylene terephthalate or polyethylene naphthalate), polycarbonate, polymethyl(meth)acrylate (PMMA), cellulose acetate, cellulose triacetate, and ethyl cellulose. Foam backings may be used. Examples of other substrates include, but are not limited to, metal such as stainless steel, metal or metal oxide coated polymeric material, metal or metal oxide coated glass, and the like.

The assemblies of the present disclosure may be used in any article conventionally known to use such assemblies such as labels, tapes, signs, covers, marking indices, display components, touch panels, and the like. Flexible backing materials having microreplicated surfaces are also contemplated. The assemblies as described herein may be coated/applied on a substrate using any conventional coating techniques modified as appropriate to the particular substrate. For example, assemblies may be applied/coated to a variety of solid substrates by methods such as roller coating, flow coating, dip coating, spin coating, spray coating knife coating, and die coating. These various methods of coating allow the assemblies to be placed on the substrate at variable thicknesses thus allowing a wider range of use of the assemblies.

The substrate to which the assemblies may be applied is selected depending on the particular application. For example, the assemblies may be applied to sheeting products (e.g., decorative graphics and reflective products), label stock, and tape backings. Additionally, the assemblies may be applied directly onto other substrates such as a metal panel (e.g., automotive panel) or a glass window so that yet another substrate or object can be attached to the panel or window. Accordingly, the assemblies of the present disclosure may find a particular use in the automotive manufacturing industry (e.g. for attachment of exterior trim parts or for weatherstrips) or in the construction industry.

As such, the foamed polymeric compositions and assemblies according to the present disclosure are particularly suited for (industrial) interior applications, more in particular for construction market applications, automotive applications or electronic applications. In the context of automotive applications, the polymeric foamed compositions as described herein may find particular use for adhering e.g. automotive body side mouldings, weather strips or rearview mirrors. Regarding electronic applications, the foamed polymeric compositions as described herein are particularly suitable for the fixation of display panels in mobile hand-held electronic devices.

In yet another aspect, the present disclosure is directed to the use of a foamable precursor of a microcellular foamed polymeric composition or a microcellular foamed polymeric composition or an assembly as described above for industrial applications.

The present disclosure is further directed to the use of a foamable precursor of a microcellular foamed polymeric composition or a microcellular foamed polymeric composition or an assembly as described above for interior applications, in particular for construction market applications and transportation market applications, in particular automotive and aerospace applications, more in particular for taped seal on body, taped seal on door, exterior and interior parts attachment and weather-strip tape applications for the automotive industry.

The present disclosure is further directed to the use of a foamable precursor of a microcellular foamed polymeric composition or a microcellular foamed polymeric composition or an assembly as described above for electronic applications, in particular for the fixation of display panels in mobile hand-held electronic devices.

The present disclosure is further directed to the use of a foamable precursor of a microcellular foamed polymeric composition or a microcellular foamed polymeric composition or an assembly as described above for the bonding to a low surface energy substrate and/or a medium surface energy substrate, in particular automotive clear coats/paints.

In the context of the present disclosure, the expression "low surface energy substrates" is meant to refer to those substrates having a surface energy of less than 34 dynes per centimeter. Included among such materials are polypropylene, polyethylene (e.g., high density polyethylene or HDPE), and blends of polypropylene (e.g. PP/EPDM, TPO).

In the context of the present disclosure, the expression "medium surface energy substrates" is meant to refer to those substrates having a surface energy comprised between 34 and 70 dynes per centimeter, typically between 34 and 60 dynes per centimeter, and more typically between 34 and 50 dynes per centimeter. Included among such materials are polyamide 6 (PA6), acrylonitrile butadiene styrene (ABS), PC/ABS blends, polycarbonate (PC), polyvinylchloride (PVC), polyamide (PA), polyurethanes (PUR), thermoplastic elastomers (TPE), polyoxymethylene (POM), polystyrene (PS), poly(methyl methacrylate) (PMMA), clear coat surfaces, in particular clear coats for vehicles like a car or coated surfaces for industrial applications and composite materials like fiber reinforced plastics.

The surface energy is typically determined from contact angle measurements as described in ASTM D7490-08.

In another aspect, the present disclosure is directed to the use of a thermoplastic polymeric material having a Vicat softening temperature greater than 20°C, when measured according to test method ASTM D1525-09, for stabilizing the microcellular structure of a foamable precursor of a foamed polymeric composition, wherein the foamable precursor comprises:
a) a (meth)acrylate-based (co)polymeric base component having a glass transition temperature (Tg) no greater than 20°C, when measured by Differential Scanning Calorimetry (DSC) according to test method ASTM D3418-15; and
b) optionally, a physical foaming agent.

### EXAMPLES

The present disclosure is further illustrated by the following examples. These examples are merely for illustrative purposes only and are not meant to be limiting on the scope of the appended claims.

### Test methods and procedures:

### Compression test method

The maximum compression values of the foamed polymeric compositions are determined according to the following procedure. A circular specimen with a diameter of 51 mm is compressed in a tensile testing machine (Zwick Z050, Zwick/Roell AG, Ulm, Germany) between two parallel plates until a compression force of 2000 kPa is reached. The gap difference between uncompressed state and the maximum compression force at 2000 kPa is used to calculate the compressibility of the sample. The reduction of the gap size is measured depending on the increasing pressure, which is applied on the sample with a speed of 10 mm/min.

### Tensile stress relaxation test method

The elongation at break values of the foamed polymeric compositions are determined according to the following tensile stress relaxation procedure. The samples are analyzed on a tensile testing machine (Zwick Z020, Zwick/Roell AG, Ulm, Germany). For the analysis, samples having a width of 4 mm are prepared for further testing. The samples are elongated with a 300 mm/min elongation speed until the sample brakes. The maximum elongation at break values (in %) are calculated based on a tensile strength vs. elongation diagram.

### 90°-Peel-test at 300 mm/min (according to Test Method, Finat No. 2, 8^{th} edition 2009)

The 90° peel adhesion values of the foamed polymeric compositions are determined according to the following procedure. Single layered foamed strips according to the present disclosure and having a width of 12.7 mm and a length > 120 mm are cut out in the machine direction from the sample material. For test sample preparation, the liner is first removed from the one adhesive side and placed on an aluminum strip having the following dimension 22 x 1.6 cm, and 0.13 mm thickness. Then, the adhesive coated side of each foamed strip is placed, after the liner is removed, with its adhesive side down on a clean steel test panel using light finger pressure. Next, the test samples are rolled twice in each direction with a standard FINAT test roller (weight 6.8 kg) at a speed of approximately 10 mm per second to obtain intimate contact between the adhesive mass and the surface. After applying the foamed strips to the stainless-steel test panel, the test samples are allowed to dwell at ambient room temperature (23°C +/- 2°C, 50% relative humidity +/-5%) prior to testing. For peel testing, the test samples are in a first step clamped in the lower movable jaw of a Zwick tensile tester (Model Zwick Z020, commercially available from Zwick/Roell AG, Ulm, Germany). The foamed polymeric strips are folded back at an angle of 90° and their free ends grasped in the upper jaw of the tensile tester in a configuration commonly utilized for 90° measurements. The tensile tester is set at 300 mm per minute jaw separation rate. Test results are expressed in Newton per 10 mm (N/cm).

### Thermal desorption analysis of organic emissions according to VDA test method 278

VDA method 278 is a test method used for the determination of organic emissions from non-metallic trim components used to manufacture the interior of motor vehicles (VDA stands for "Verband der Automobilindustrie", the German Association of Automobilists). For the VOC value, the method involves determining the sum of volatile and semi-volatile compounds up to n-C₂₀ which are emitted.

For measuring the VOC values, samples of 30 mg +/- 5 mg are weighed directly into empty glass sample tubes. The volatile and semi-volatile organic compounds are extracted from the samples into the gas stream and are then re-focused onto a secondary trap prior to injection into a Agilent 7890B GC system for analysis. An automated thermal desorber (Markes International Ultra-UNITY system) is hereby used for the VDA 278 testing.

For the VOC analysis, the test method comprises an extraction stage which involves desorbing the sample at 90°C for 30 minutes to extract VOC's up to n-C₂₀. This is followed by a semi-quantitative analysis of each compound as microgram toluene equivalents per gram of sample. The results expressed are the average of 2 measurements per sample. The higher value of the measurements is indicated as the result, as described in the VDA278 test method.

### Raw materials used:

In the examples, the following raw materials are used:
**AP-1** is a 2-Ethylhexylacrylate/acrylic acid (90wt.% / 10wt.%) acrylate-based copolymer obtained according to the polymerization procedure described in U.S. Pat. No. 6,294,249 B1 (Hamer et al.) and having a weight average molecular weight of about 600.000 g/mol.

**AcResin A260 (A260)** is an acrylate copolymer which is obtained from BASF AG, Germany.

**PMMA 6N (PMMA)** is a poly(methyl methacrylate) polymer, which is from Evonik AG, Germany.

**PMMA-CP** is a methyl methacrylate-based copolymer, commercially available from Evonik AG, Germany, under the commercial name Acrylite hw55.

**EVA** is an ethylene-vinyl acetate copolymer, commercially available from ExxonMobil Chemical, USA, under the commercial name Escorene Ultra UL00514.

**Pregon CF** is a propylene-glycol bisaziridino-functional oligomer having a number average molecular weight of about 6000 g/mol, which is obtained from 3M Espe GmbH, Germany.

**Talcum** is a nucleating agent, commercially available from Imerys Talc Belgium, under the commercial name Mistrocell L88.

**CO₂** is carbon dioxide gas, used as a physical foaming agent and commercially available from Linde.

### Polymer compounding and sample preparation:

### Exemplary foamed polymeric compositions

The compositions of the exemplary foamed polymeric compositions (Examples E1 to E5) are listed in Table 1 below (in wt.%).

**Table 1: Chemical composition of the exemplary foamed polymeric compositions.**

| | E1 | E2 | E3 | E4 | E5 |
|---|---|---|---|---|---|
| AP-1 | 63 | 37.4 | 84.2 | - | - |
| A260 | - | - | - | 75.5 | 74.7 |
| PMMA | 27 | - | - | - | - |
| PMMA-CP | 9 | - | - | - | - |
| EVA | - | 56.1 | 9.4 | 18.8 | 18.7 |
| Pregon CF | - | - | - | - | 0.5 |
| Talcum | 1 | 6.5 | 4.9 | 4.9 | 4.7 |
| CO₂ | **[a]** | **[b]** | 1.5 | 0.8 | 1.4 |

| | | | | | |
|---|---|---|---|---|---|
| **[a]** CO₂ in supercritical state is added to the reactor until a pressure of 16 MPa is reached. **[b]** CO₂ in supercritical state is added to the reactor until a pressure of 10 MPa is reached. | | | | | |

### Foamed polymeric composition preparation for Example E1

The foamed polymeric composition of Example 1 is made according to the following procedure. The suitable amount of PMMA, AP-1, PMMA-CP and talcum are blended in a dynamic kneader (Plastograph EC plus equipped with W50 EHT mixing chamber, Brabender GmbH & Co. KG) at 180°C and 100 rpm for 5 minutes. The compound is heat pressed to a height of about 500 micrometers between two siliconized paper liners at 200°C and 15N for 30 seconds. A sample (dimensions: 5 x 3 cm) with one open and one liner side is placed in a glass vial, which is then placed in a high-pressure reactor (HPR-Series, Supercritical Fluid Technologies Inc.). The reactor is heated to the desired foaming temperature (90°C) via an electrical heating mantle. Using a supercritical fluid pump (SFT-10, Supercritical Fluid Technologies Inc.), CO₂ in supercritical state is added to the reactor until a pressure of 16 MPa is reached. After a saturation time of one hour, the reactor is depressurized with a pressure drop rate of about 4 MPa/s, which leads to a temperature decrease of about 40 °C and to the desired foamed polymeric composition.

### Foamed polymeric composition preparation for Example E2

The foamed polymeric composition of Example E2 is made according to the following procedure. The suitable amount of EVA, AP-1 and talcum are blended in a dynamic kneader (Plastograph EC plus equipped with W50 EHT mixing chamber, Brabender GmbH & Co. KG) at 150°C and 80 rpm for 5 minutes. The compound is heat pressed to a height of about 1000 micrometers between two siliconized paper liners at 160°C and 15N for 30 seconds. A sample (dimensions: 10 x 3 cm) with one open and one liner side is placed in a glass vial, which is then placed in a high-pressure reactor (BR-500, Berghof Products & Instruments GmbH). The reactor is heated to the desired foaming temperature (100°C) via an electrical heating mantle. Using a supercritical fluid pump (Supercritical 24, Teledyne SSI), CO₂ in supercritical state is added to the reactor until a pressure of 10 MPa is reached. After a saturation time of one hour, the reactor is depressurized with a pressure drop rate of about 4 MPa/s, which leads to a temperature decrease of about 40 °C and to the desired foamed polymeric composition.

### Devices and technical equipment used for Examples E3-E5

The devices and technical equipment used for Examples E3-E5 are summarized below in Table 2.

**Table 2: Devices and technical equipment.**

| Name | Description | Supplier |
|---|---|---|
| EEL-XTS 30 | Co-rotating twin screw extruder, having a diameter of 30 mm and with a L/D ratio of 60 | Berstorff |
| Typ GPA 36/36-01 | Melt pump | Nordson Kreyenborg |
| P1 Static Cooling Mixer | Static cooling mixer | Promix Solutions AG |
| APV Die | Sheet extrusion foaming die | AxFlow |
| SFT-10 | Supercritical fluid pump | Supercritical Fluid Technologies Inc. |

The melt pump, the static cooling mixer and the foaming die are retrofitted to the twin screw extruder as represented in Figure 1.

### Foamed polymeric composition preparation for Example E3

The foamed polymeric composition is made using the extrusion apparatus as detailed in Table 2. The extrusion apparatus comprises a total of 7 heat zones: 2 in the co-rotating twin screw extruder, one in the melt pump, 2 in the static cooling mixer, one in the foaming die, and one in the heated hose which makes the junction between the static cooling mixer and the foaming die. The processing conditions, in particular the temperature and pressure profile of the extrusion apparatus, are described in Table 3 below. Immediately after the continuous extrusion process, the resulting foamed polymeric composition is exposed to a cumulative electron-beam dosage of 21 Mrad.

### Example E3:

**Table 3: Processing conditions (temperature profile) for the exemplary foamed polymeric composition of Example E3.**

| Zone (Barrel) | Temperature (°C) | Description |
|---|---|---|
| Z1 (twin screw extruder) | 160 | Feeding of acrylic polymer and talcum (10 kg/h) |
| Z2 (twin screw extruder) | 120 | |
| Z3 (Melt Pump) | 120 | |
| Z4 (Static mixer composition - electrical heating of surface) | 110 | Injection of super critical CO₂ |
| Z6 (Static mixer composition - cooling of static mixing elements with oil) | 80 | |
| Z7 (Heated hose) | 100 | |
| Z8 (Foaming Die) | 80 | Coating and expansion of the melt |

The screw speed is set at 100 rpm at a throughput of 10 kg/h. The melted polymer enters the melt pump at a pressure of 1 MPa. The pressure is increased to a value of 18 MPa at the exit of the melt pump. The static cooling mixer composition creates a pressure loss of 9 MPa. The pressure at the entry of the foaming die is 9.4 MPa.

### Foamed polymeric composition preparation for Example E4

The foamed polymeric composition is made using the extrusion apparatus as detailed in Table 2. The extrusion apparatus comprises a total of 8 heat zones: 3 in the co-rotating twin screw extruder, one in the melt pump, 2 in the static cooling mixer, one in the foaming die, and one in the heated hose which makes the junction between the static cooling mixer and the foaming die. The processing conditions, in particular the temperature and pressure profile of the extrusion apparatus, are described in Table 4 below. Immediately after the continuous extrusion process, the resulting foamed polymeric composition is exposed to a cumulative electron-beam dosage of 21 Mrad.

### Example E4:

**Table 4: Processing conditions (temperature profile) for the exemplary foamed polymeric composition of Example E4.**

| Zone (Barrel) | Temperature (°C) | Description |
|---|---|---|
| Z1 (twin screw extruder) | 160 | Feeding of acrylic polymer and talcum (10 kg/h) |
| Z2 (twin screw extruder) | 115 | |
| Z3 (twin screw extruder) | 90 | |
| Z4 (Melt Pump) | 90 | |
| Z5 (Static mixer composition - electrical heating of surface) | 90 | Injection of super critical CO₂ |
| Z6 (Static mixer composition - cooling of static mixing elements with oil) | 55 | |
| Z7 (Heated hose) | 90 | |
| Z8 (Foaming Die) | 50 | Coating and expansion of the melt |

The screw speed is set at 100 rpm at a throughput of 10 kg/h. The melted polymer enters the melt pump at a pressure of 1 MPa. The pressure is increased to a value of 12 MPa at the exit of the melt pump. The static cooling mixer composition creates a pressure loss of 4.5 MPa. The pressure at the entry of the foaming die is 7.4 MPa.

### Foamed polymeric composition preparation for Example E5

The foamed polymeric composition is made using the extrusion apparatus as detailed in Table 2. The extrusion apparatus comprises a total of 7 heat zones: 2 in the co-rotating twin screw extruder, one in the melt pump, 2 in the static cooling mixer, one in the foaming die, and one in the heated hose which makes the junction between the static cooling mixer and the foaming die. The processing conditions, in particular the temperature and pressure profile of the extrusion apparatus, are described in Table 5 below. Immediately after the continuous extrusion process, the resulting foamed polymeric composition is exposed to a cumulative electron-beam dosage of 21 Mrad.

### Example E5:

**Table 5: Processing conditions (temperature profile) for the exemplary foamed polymeric composition of Example 5.**

| Zone (Barrel) | Temperature (°C) | Description |
|---|---|---|
| Z1 (twin screw extruder) | 120 | Feeding of acrylic polymer and talcum (10 kg/h) |
| Z2 (twin screw extruder) | 100 | Feeding of Pregon CF |
| Z3 (Melt Pump) | 100 | |
| Z4 (Static mixer composition - electrical heating of surface) | 105 | Injection of super critical CO₂ |
| Z6 (Static mixer composition - cooling of static mixing elements with oil) | 75 | |
| Z7 (Heated hose) | 100 | |
| Z8 (Foaming Die) | 80 | Coating and expansion of the melt |

The screw speed is set at 100 rpm at a throughput of 10 kg/h. The melted polymer enters the melt pump at a pressure of 1 MPa. The pressure is increased to a value of 18 MPa at the exit of the melt pump. The static cooling mixer composition creates a pressure loss of 9.1 MPa. The pressure at the entry of the foaming die is 9.5 MPa.

### Test Results:

### Foam density

The foam density of the foamed polymeric compositions of Examples E1, E2 and E5 are determined according to Test method ASTM D792. The results are described in Table 6 below.

**Table 6: Foam density measurements**

| Examples | E1 | E2 | E5 |
|---|---|---|---|
| Foam Density (g/cm³) | 0.32 | 0.25 | 0.33 |

As can be seen from the results of Table 6, foamed polymeric compositions according to the present disclosure have low foam densities.

### Compression

The compression characteristics of the foamed polymeric compositions of Examples E1, E3 and E5 are determined according to the compression test procedure described above. The results are described in Table 7 below.

**Table 7: Compression measurements**

| Examples | E1 | E3 | E5 |
|---|---|---|---|
| Maximum compression value (%) | 71 | 63 | 66 |

As can be seen from the results of Table 7, the foamed polymeric compositions according to the present disclosure have excellent compressibility properties.

### Elongation

The elongation characteristic of the foamed polymeric composition of Example E3 is determined according to the tensile stress relaxation test procedure described above. The result is described in Table 8 below.

**Table 8: Elongation at break measurements**

| Examples | E3 |
|---|---|
| Elongation at break (%) | 521 |

As can be seen from the result of Table 8, the foamed polymeric compositions according to the present disclosure have excellent elongation properties.

### Adhesion

The adhesion characteristics of the foamed polymeric compositions of Examples E3 and E4 are determined according to the tensile stress relaxation test procedure described above. The results are described in Table 9 below.

**Table 9: 90° peel adhesion measurements**

| Examples | E3 | E4 |
|---|---|---|
| 90° peel adhesion (N/cm) | 7 | 8.1 |

As can be seen from the results of Table 9, the foamed polymeric compositions according to the present disclosure have excellent adhesion properties.

### VOC and FOG

The VOC and FOG characteristics of the foamed polymeric composition of Example E4 are determined according to the VDA 278 test method described above. The results are described in Table 10 below.

**Table 10: VOC and FOG measurements**

| Example | 4 |
|---|---|
| VDA 278 VOC (ppm) | 35 |
| VDA 278 FOG (ppm) | 110 |

As can be seen from the results of Table 10, the foamed polymeric compositions according to the present disclosure have excellent VOC and FOG characteristics.

## Claims

1. A foamable precursor of a microcellular foamed polymeric composition, wherein the foamable precursor comprises:
a) a (meth)acrylate-based (co)polymeric base component having a glass transition temperature (Tg) no greater than 20°C, when measured by Differential Scanning Calorimetry (DSC) according to test method ASTM D3418-15;
b) a thermoplastic polymeric material having a Vicat softening temperature greater than 20°C, when measured according to test method ASTM D1525-09; and
c) optionally, a physical foaming agent.

2. A precursor according to claim 1, wherein the (meth)acrylate-based (co)polymeric base component has a glass transition temperature (Tg) no greater than 15°C, no greater than 10°C, no greater than 5°C, no greater than 0°C, no greater than -5°C, no greater than -10°C, no greater than -15°C, no greater than -20°C, no greater than - 25°C, or even no greater than -30°C, when measured by DSC according to test method ASTM D3418-15.

3. A precursor according to any of claim 1 or 2, wherein the thermoplastic polymeric material has a Vicat softening temperature greater than 25°C, greater than 30°C, greater than 40°C, greater than 50°C, greater than 60°C, greater than 70°C, greater than 80°C, greater than 90°C, greater than 100°C, or even greater than 110°C, when measured according to test method ASTM D1525-09.

4. A precursor according to any of the preceding claims, wherein the thermoplastic polymeric material is selected from the group consisting of polystyrenes, polymethacrylics, alkylene-vinyl acetate copolymers, polycarbonates, rubber-based elastomeric materials, rubber-based non-elastomeric materials, polyacrylonitriles, polyvinyl chlorides, polyvinyl acetates, polyvinyl butyrates, polyvinyl alcohols, acrylonitrile butadiene styrene, alkylene-acrylic acid copolymers, polybutylene terephthalate, polyurethanes, polyesters, polyethers, polyamides, polylactides, polyolefins, polyphenylene oxides, styrenic block copolymers, polyetherimides, epoxy-based polymers, fluorinated polymers, cellulose-based polymers, starch, and any combinations or mixtures thereof.

5. A precursor according to any of the preceding claims, wherein the thermoplastic polymeric material is selected from the group consisting of polystyrenes, polymethylmethacrylate, ethylene-vinyl acetate copolymers, and any combinations or mixtures thereof.

6. A precursor according to any of the preceding claims, wherein the physical foaming agent is selected from the group consisting of carbon dioxide, nitrogen, SF₆, nitrous oxide, perfluorinated fluids, hydrofluorocarbons, hydrochlorofluorocarbons, hydrocarbons, argon, helium, noble gases, air, and any combinations or mixtures thereof.

7. A precursor according to any of the preceding claims, wherein the physical foaming agent is selected to comprise carbon dioxide.

8. A precursor according to any of the preceding claims, wherein the physical foaming agent is present in the precursor in supercritical conditions, in particular in pressure and temperature conditions greater than the supercritical pressure (P_{c}) and the supercritical temperature (T_{c}) conditions for the physical foaming agent.

9. A precursor according to any of the preceding claims, which comprises:
a) from 20 to 98 wt.%, from 20 to 95 wt.%, from 20 to 90 wt.%, from 30 to 90 wt.%, from 40 to 85 wt.%, from 50 to 85 wt.%, from 60 to 85 wt.%, from 65 to 85 wt.%, or even from 70 to 85 wt.%, of the (meth)acrylate-based (co)polymeric base component having a glass transition temperature (Tg) no greater than 20°C, when measured by Differential Scanning Calorimetry (DSC) according to test method ASTM D3418-15; and
b) from 1 to 75 wt.%, from 2 to 75 wt.%, from 5 to 70 wt.%, from 5 to 65 wt.%, from 5 to 60 wt.%, from 5 to 55 wt.%, from 5 to 50 wt.%, from 10 to 50 wt.%, from 10 to 40 wt.%, from 10 to 30 wt.%, from 10 to 25 wt.%, or even from 15 to 25 wt.%, of the thermoplastic polymeric material having a Vicat softening temperature greater than 20°C, when measured according to test method ASTM D1525-09;
c) optionally, from 0 to 5 wt.%, from 0.01 to 5 wt.%, from 0.05 to 5 wt.%, from 0.1 to 5 wt.%, from 0.1 to 4 wt.%, from 0.1 to 3 wt.%, from 0.2 to 3 wt.%, from 0.5 to 3 wt.%, from 0.5 to 2.5 wt.%, or even from 0.5 to 2 wt.%, of the physical foaming agent;
d) optionally, from 0 to 20 wt.%, from 0.5 to 15 wt.%, from 0.5 to 10 wt.%, from 1 to 10 wt.%, from 1 to 8 wt.%, from 2 to 8 wt.%, or even from 2 to 6 wt.%, of a nucleating agent; and
e) optionally, from 0 to 20 wt.%, from 1 to 15 wt.%, from 2 to 15 wt.%, from 3 to 15 wt.%, or even from 5 to 15 wt.%, of a polymeric blend compatibilizer;
wherein the weight percentages are based on the total weight of the foamable precursor.

10. A process of manufacturing a microcellular foamed polymeric composition, comprising the steps of:
a) providing a foamable precursor of a microcellular foamed polymeric composition as described in any of the preceding claims;
b) optionally, providing a physical foaming agent as described in any of the preceding claims;
c) allowing the physical foaming agent to foam the foamable precursor of a microcellular foamed polymeric composition, thereby obtaining a microcellular foamed polymeric composition; and
d) optionally, crosslinking the microcellular foamed polymeric composition.

11. A process according to claim 10, comprising the steps of:
a) providing a mixing apparatus;
b) incorporating and mixing the foamable precursor composition in the mixing apparatus;
c) optionally, degassing the foamable precursor composition, in particular while the foamable precursor composition is still in the mixing apparatus;
d) optionally, exposing the foamable precursor composition to increased pressure and temperature conditions, in particular to pressure and temperature conditions greater than the supercritical pressure (P_{c}) and the supercritical temperature (T_{c}) conditions for the physical foaming agent;
e) optionally, providing the physical foaming agent into the mixing apparatus;
f) mixing the foamable precursor composition and the physical foaming agent (provided in supercritical conditions) in the mixing apparatus;
g) optionally, reducing the pressure and/or temperature conditions of the foamable precursor composition, whereby the pressure and temperature conditions are still greater than the supercritical pressure (P_{c}) and the supercritical temperature (T_{c}) conditions for the physical foaming agent;
h) allowing the physical foaming agent to foam the foamable precursor of a microcellular foamed polymeric composition, in particular by exposing the foamable precursor composition to a reduced pressure (in particular atmospheric pressure), whereby the physical foaming agent expands resulting in foaming of the foamable precursor of the microcellular foamed polymeric composition, and thereby obtaining a microcellular foamed polymeric composition; and
i) optionally, crosslinking the microcellular foamed polymeric composition.

12. A process according to any of claim 10 or 11, wherein the foamable precursor of a microcellular foamed polymeric composition is a hot melt processable polymeric composition, and the mixing apparatus is, in particular, a hot melt mixing apparatus.

13. A foamed polymeric composition obtained from the process according to any of claims 10 to 12.

14. A foamed polymeric composition according to claim 13, which has an average cell size no greater than 200 micrometers, no greater than 180 micrometers, no greater than 160 micrometers, no greater than 140 micrometers, no greater than 120 micrometers, no greater than 100 micrometers, no greater than 80 micrometers, no greater than 70 micrometers, no greater than 60 micrometers, no greater than 50 micrometers, no greater than 40 micrometers, no greater than 30 micrometers, no greater than 20 micrometers, or even no greater than 10 micrometers, when determined by scanning electron microscopy according to ASTM D3576.

15. Use of a foamed polymeric composition according to any of claim 13 or 14 for industrial applications, in particular for interior applications, more in particular for construction market applications, automotive applications or electronic applications.
